# EUROPEAN PATENT SPECIFICATION

(11) **EP 1 180 448 B1**
(45) Date of publication and mention of the grant of the patent: **01.04.2009**
(21) Application number: 01116748.3
(22) Date of filing: 19.07.2001
(51) Int. Cl.: B60N 2/28

(54) **Child seat base**
Träger für einen Kindersitz
Support d'un siège pour enfant

(30) Priority: 09.08.2000 JP 2000241519
(43) Date of publication of application: 20.02.2002
(60) Divisional application: 07104560.3
(73) Proprietor: TAKATA CORPORATION, Minato-ku, Tokyo 106-8510 (JP)
(72) Inventor: Hiramatsu, Koji, Minato-ku, Tokyo 106-8510 (JP); Yamanishi, Takahiro, Minato-ku, Tokyo 106-8510 (JP)
(74) Representative: Banzer, Hans-Jörg

(56) References cited:
- EP-A- 0 164 909
- EP-A- 0 791 500
- EP-A- 0 813 992
- DE-U- 9 208 778
- DE-U- 29 812 319
- FR-A- 2 348 835
- FR-A- 2 741 847

## Description

### [Technical Field of the Invention]

The present invention relates to a child seat base for fixing a child seat on a seat of a vehicle. More particularly, the present invention relates to a child seat base which provides the advantages, for example, easy storage and carriage, or easy height adjustment.

### [Description of the Related Art]

There are provided, broadly, two types of child seats to be placed on the seat of a vehicle, that is, an infant seat adapted for infants of less than 10 kg in weight, and a child seat adapted for toddlers of 9 kg to 19 kg in weight. The infant seat is placed so that an infant sitting therein faces toward the back of the vehicle. The child seat is placed so that a toddler sitting therein faces toward the front of the vehicle, in a manner similar to that of a normal seat. The weight of the infant seat is approximately 4 kg, and the weight of the child seat is approximately 4.5 kg.

In general, infant seats for infants and child seats for toddlers are generically named "child seats". In this specification, the child seat also refers to both seats.

A child seat base is used to fix such a child seat on the seat of the vehicle. The base has a base body shaped like a rectangular plate. The base body is provided with a fixing member for detachably fixing the child seat. A lifting stopper is pivotally mounted on the upper rear surface of the base body. The lifting stopper functions as a member for preventing the base member from lifting. A pair of right and left arms are disposed on both rear ends of the base body. The arms extend backward from the rear end of the base body in a horizontal direction, and each of the arms has a hook-shaped connecting portion at its leading end.

The base body of the child seat base is fixed by connecting the connecting portions of the right and left arms to an anchor on the seat of the vehicle and shifting the lifting stopper in accordance with the angle of the rear surface of the seat of the vehicle. Then, the child seat is fixed on the upper surface of the base body by the fixing member of the base member.

In recent years, such child seat bases have been rapidly become widespread since the advantages thereof are valued, that is, they are applied to both child seats for infants and children, and are light in weight because they are separated from the child seats, or they allow the child seat to be easily fixed on the seat of the vehicle.

### [Problems to be Solved by the Invention]

In order to inhibit the child seat from tilting frontward, the above-described child seat base is additionally provided with a support leg or a tether strap. However, since a conventional support leg does not have any mechanism for easy detachment from the base, it is too bulky to store, or it cannot be carried easily. Furthermore, since a screw-nut mechanism is used to adjust the height of the support leg according to the floors of various vehicles, the adjustment is troublesome and takes much time. In contrast, since the tether strap needs to be prepared in various ways according to the type of vehicle, it is not versatile. A child seat base according to the preamble of independent claim 1 is known from DE 298 12 319 U1.

Furthermore, G 94 11 951.1 U1, DE 298 15 824 U1 and G 88 05 321.0 U1 disclose plug-in connectors for releasably engaging two pipes with one another using a leaf spring as an engagement means, the leaf spring having a projection extending through a radial opening in the sidewall of one of the pipes. By pressing down the projection of the leaf spring, the corresponding pipe can be inserted into the other pipe.

The present invention has been made in view of the above problems, and an object of the invention is to provide a child seat base which provides the advantages of, for example, easy storage and carriage or easy height adjustment.

### [Means for Solving the Problems]

According to the present invention, the above problems are overcome by a child seat base as defined in anyone of claims 1-3.

In order to overcome the above problems, a child seat base according to the present invention serves to fix a child seat on a seat of a vehicle, and includes a base body to be placed and fixed on the seat, and a support leg mounted on the front side of the base body so as to support the front portion of the base body on the floor of the vehicle. The support leg can be attached to and detached from the base body with a single motion.

According to this aspect, the support leg can be easily attached and detached with a single motion. Furthermore, by being detached from the base body when stored and carried into and out of the vehicle, the support leg does not become bulky. Therefore, handling and carriage are facilitated.

### [Description of the Embodiments]

Description will be given below with reference to the drawings.
Fig. 1 is a perspective view showing the overall configuration of a child seat base according to an embodiment of the present invention.
Fig. 2 is a perspective view showing the structures of a pipe frame and a support leg in the child seat base according to the embodiment of the present invention.
Fig. 3 is an exploded perspective view of the child seat base according to the embodiment of the present invention.
Fig. 4(A) is a detailed sectional view of an example of a connecting portion between a pipe base and a step guide pipe when they are connected, Fig. 4(B) is a detailed sectional view showing a state in which the connection is broken, and Fig. 4(C) is a sectional view showing a connecting portion between the pipe base and the step guide pipe according to an embodiment of the invention.
Fig. 5(A) is a detailed sectional view showing a state in which a foot-locking mechanism of the support leg is locked, and Fig. 5(B) is a detailed sectional view showing a state in which the foot-locking mechanism is unlocked.
Fig. 6(A) is a detailed sectional view showing a state in which a step-locking mechanism of the support leg is locked, and Fig. 6(B) is a detailed sectional view showing a state in which the step-locking mechanism is unlocked.
In the following description, the upward, downward, frontward, backward, leftward, and rightward directions are based on those in Figs. 1 and 2.

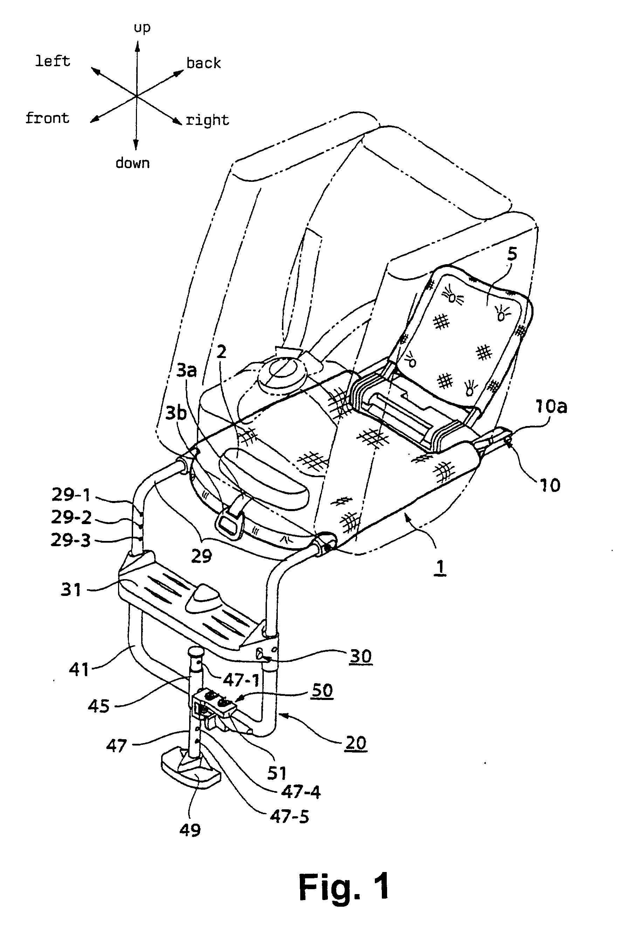

As shown in Fig. 1, the child seat base includes a base body 1 to be placed and fixed on a seat of a vehicle. The base body 1 has a hook 2, a belt 3a, and an operating piece 3b for detachably fixing a child seat (see two-dot chain lines in Fig. 1). On the rear side of the base body 1, a lifting stopper 5 is mounted so as to pivot frontward and downward. The lifting stopper 5 functions as a member for preventing the base body 1 from lifting.

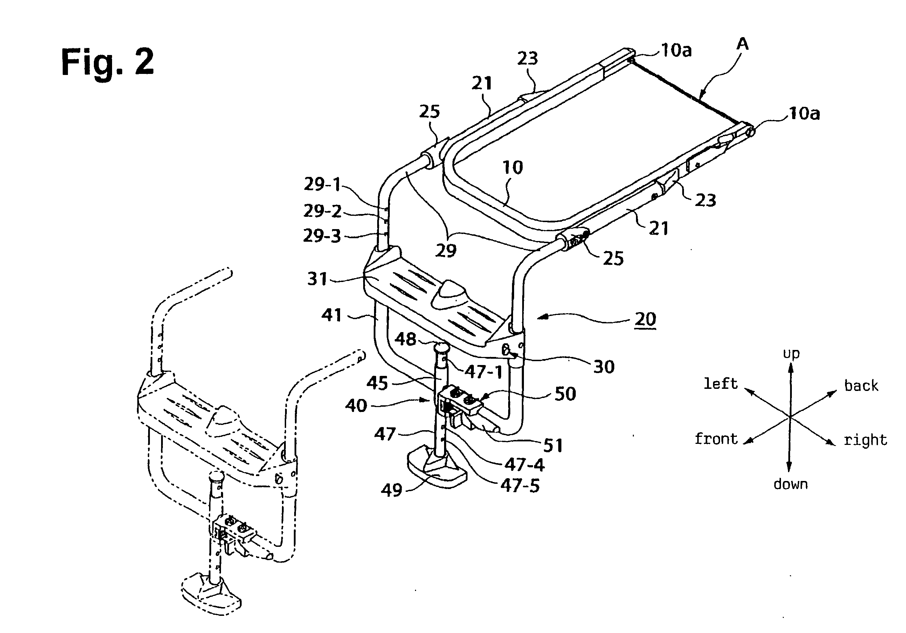

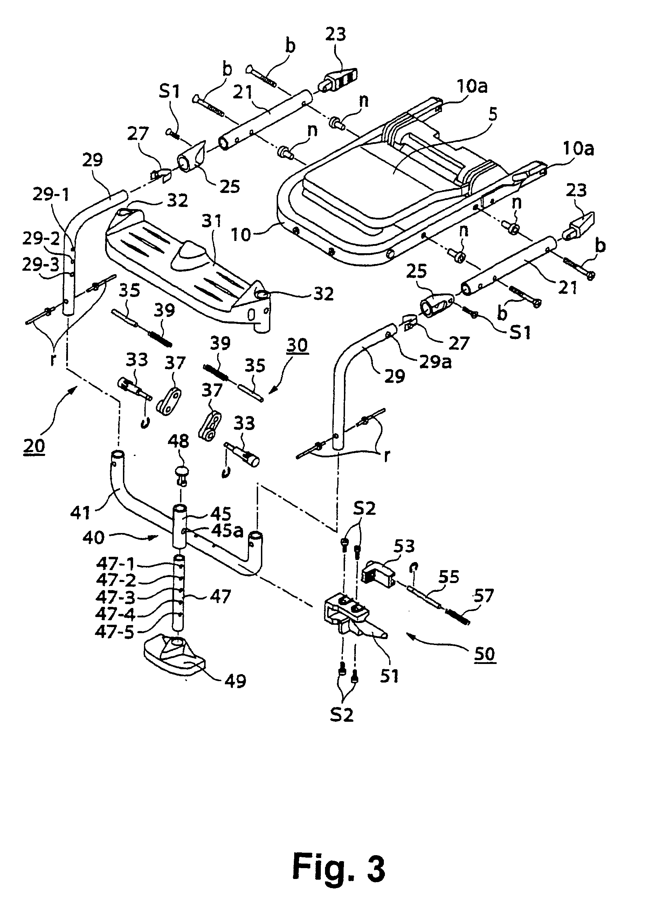

As is plainly shown in Figs. 2 and 3, the base body 1 has a U-shaped pipe frame 10. Hook-shaped connecting portions 10a are formed at both rear ends of the pipe frame 10. When fixing the base on the seat of the vehicle, the connecting portions 10a of the pipe frame 10 are connected to an anchor (shown by A in Fig. 2) on the seat of the vehicle.

The basic configuration of such a child seat base is similar to those disclosed in Japanese Patent Application Nos. 2000-38531 and 2000-106794.

As shown in Figs. 1 to 3, a support leg 20 is attached to the pipe frame 10 on the front side of the base body 1. The support leg 20 serves to support the front portion of the base body 1 on the floor of the vehicle. As is plainly shown in Figs. 2 and 3, the support leg 20 has a pair of right and left pipe bases 21. The right and left pipe bases 21 are fixed to the side portions of the pipe frame 10 with bolts "b" and nuts "n". An end cap 23 is fitted on the rear end of each pipe base 21. A pipe guide 25 is fixedly fitted on the front end of each pipe base 21 with a screw "s1", and the upper end of each step guide pipe 29 is detachably connected thereto. The step guide pipe 29 is L-shaped, and extends downward from the leading end of the pipe base 21. A lock spring 27 is placed inside the upper end portion of each step guide pipe 29.

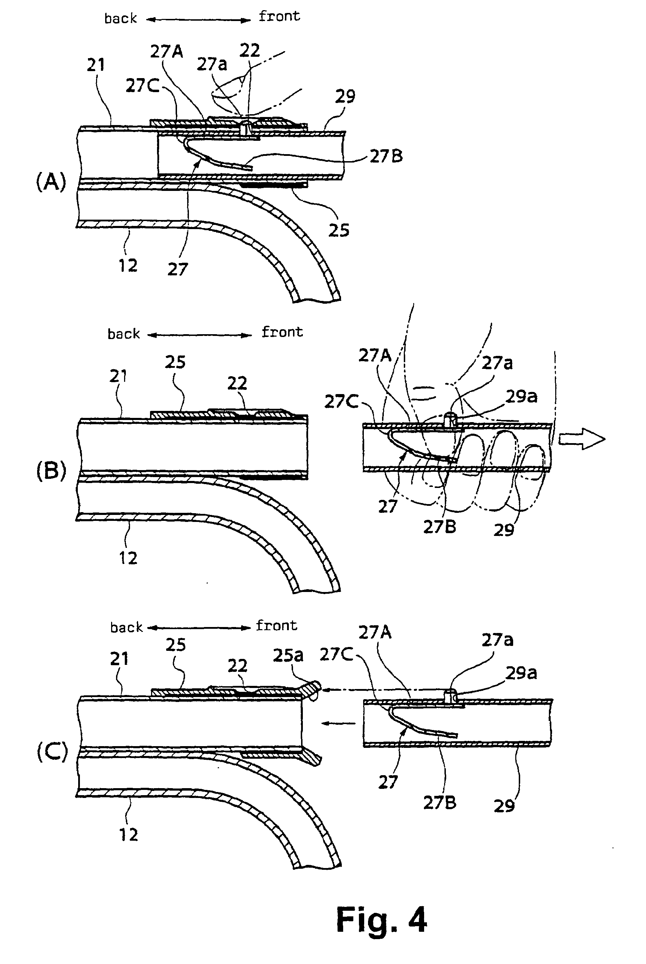

An example of a connecting portion between the pipe base 21 and the step guide pipe 29 will now be described in detail with reference to Fig. 4.

The lock spring 27 is formed of an elbowed leaf spring, and includes a pivot end 27A having a projection 27a on a part of the outer surface, a support end 27B formed on the side opposite from the pivot end 27A, and a curve point 27C disposed therebetween. The projection 27a is retained in a hole 29a of the step guide pipe 29 so as to protrude from the outer surface of the step guide pipe 29. The support end 27B is positioned by the engagement of the projection 27a with the hole 29a. The projection 27a is engaged with a hole 22 of the pipe base 21 and the pipe guide 25 in a connected state shown in Fig. 4(A). The outer rim of the hole 22 is chamfered and tapered. When the projection 27a is pressed in the connected state shown in Fig. 4(A) and the step guide pipe 29 is drawn out of the pipe base 21, a disconnected state shown in Fig. 4(B) is brought about.

The action of the lock spring 27 will be described later.

Description with reference to Figs. 2 and 3 will be given again.

A T-shaped foot section 40 is placed at the bottom ends of the right and left step guide pipes 29. The foot section 40 has a foot pipe 41 for connecting the bottom ends of the right and left step guide pipes 29. The bottom ends of the right and left step guide pipes 29 and both ends of the foot pipe 41 are fixed by rivets "r". A pipe holder 45 vertically extending is fixed to the center of the foot pipe 41. An adjusting pipe 47 is slidably fitted in the pipe holder 45. A stopper 48 is fitted in the upper end of the adjusting pipe 47, and a foot 49 is fixed to the lower end thereof. The adjusting pipe 47 is prevented from falling off by the stopper 48 and the foot 49. A foot-locking mechanism 50 is mounted to the foot pipe 41 of the foot section 40 by screws "s2". The foot-locking mechanism 50 is engaged with a positioning hole 45a of the pipe holder 45 and positioning holes 47-1 to 47-5 of the adjusting pipe 47 so as to adjust the height of the support leg 20 in multiple levels (five levels in this embodiment) and to lock a height adjusting mechanism of the support leg 20 at each level.

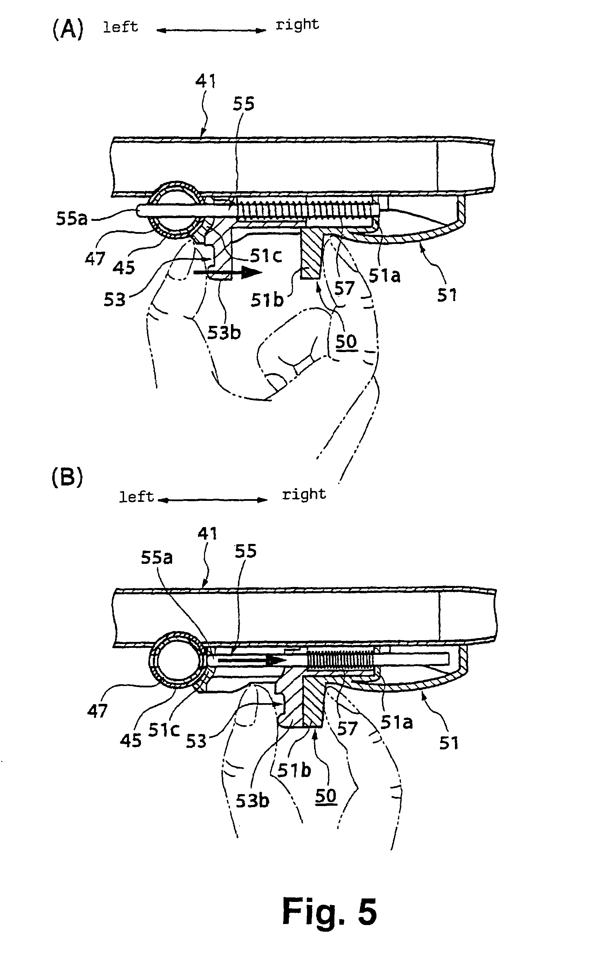

The foot-locking mechanism 50 will now be described in detail with reference to Fig. 5.

The foot-locking mechanism 50 comprises a foot-locking base 51, a foot-locking lever 53, a lock pin 55, and a spring 57. The foot-locking base 51 is fixed to the foot pipe 41 adjacent to the right side of the pipe holder 45 by screws "s2" (see Fig. 3). The foot-locking lever 53 is mounted in the foot-locking base 51 so as to slide rightward and leftward. The base 51 and the lever 53 respectively have lugs 51b and 53b. The lock pin 55 is placed inside the foot-locking base 51 and the foot-locking lever 53 so as to slide rightward and leftward.

The lock pin 55 is supported through right and left support ends 51a and 51c of the foot-locking base 51, and is integrally fixed to the foot-locking lever 53. The spring 57 is fitted on the lock pin 55. The spring 57 is incorporated in a compressed form between the support end 51a of the foot-locking base 51 and the foot-locking lever 53, and urges the foot-locking lever 53 and the lock pin 55 toward the pipe holder 45 (leftward in Fig. 5) in normal states (when no external force is applied). In this case, a front end 55a of the lock pin 55 protrudes outside through the pipe holder 45 (and the adjusting pipe 47) in the radial direction.

A method for operating the foot-locking mechanism 50 will be described later.

Description with reference to Figs. 2 and 3 will be given again.

A step 31 extends between the right and left step guide pipes 29. Support sleeves 32 are formed at both ends of the step 31. The step 31 can slide up and down with the support sleeves 32 fitted on the step guide pipes 29. A step-locking mechanism 30 is disposed at both right and left ends of the step 31. The step-locking mechanism 30 is engaged with positioning holes 29-1 to 29-3 of the step guide pipe 29 so as to adjust the height of the step 31 in multiple levels (three levels in this embodiment) and so as to lock the height of the step 31 at each level.

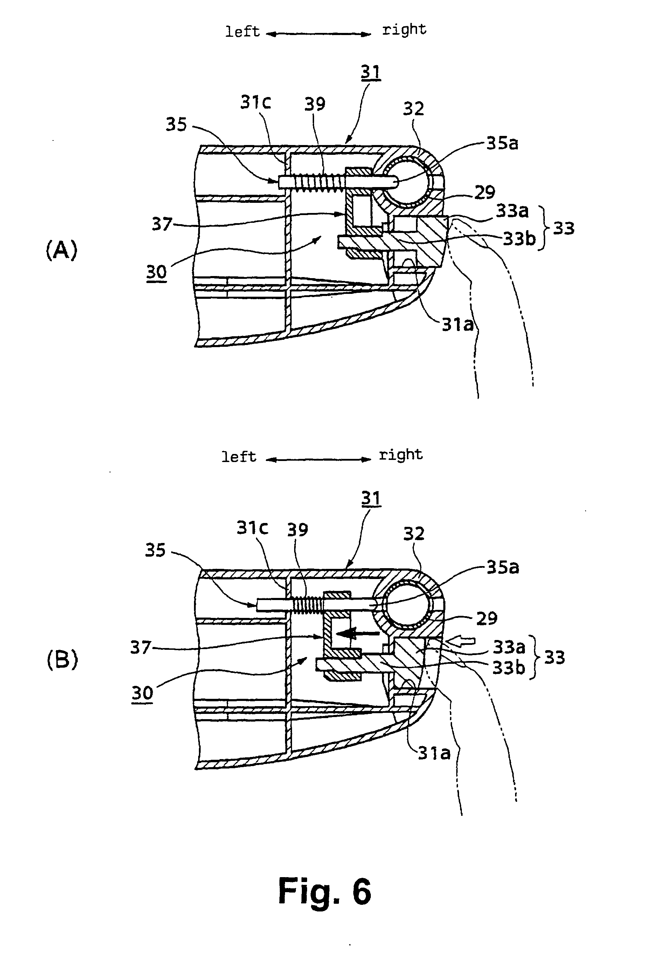

The step-locking mechanism 30 will now be described in detail with reference to Fig. 6.

The step-locking mechanism comprises a button 33, a pin 35, a joint 37, and a spring 39. The button 33 is made of a combination of a head portion 33a and a shaft portion 33b. The head portion 33a of the button 33 is slidably placed in a recess 31a formed on the side face of the step 31. The shaft portion 33b of the button 33 is slidably supported through the bottom surface of the recess 31a. The pin 35 slidably extends between the support sleeve 32 and a partition plate 31c.

The shaft portion 33b of the button 33 and the pin 35 are joined by the joint 37. The joint 37 allows the button 33 and the pin 35 to be drivingly connected to each other. The spring 39 is fitted on the pin 35. The spring 39 is placed in a compressed manner between the partition plate 31c and the joint 37, and urges the button 33 and the pin 35 toward the right and left side faces (the right side in Fig. 6) in normal states (when no external force is applied). In this case, a front end 35a of the pin 35 passes through the support sleeve 32 and enters the step guide pipe 29, and the head portion 33a of the button 33 protrudes outward from the side face of the step 31, as shown in Fig. 6(A).

A method for operating the step-locking mechanism 30 will be described later.

Next, a description will be given of a method for operating the support leg 20 in the child seat base with the above-described configuration.

First, operations of connecting and separating the base body 1 and the support leg 20 will be described.

Fig. 1 shows a state in which the support leg 20 is attached to the base body 1. In this case, as shown in Fig. 4(A), the pipe base 21 and the step guide pipe 29 are connected, and the projection 27a of the pivot end 27A of the lock spring 27 is engaged with the hole 22 of the pipe base 21 and the pipe guide 25. In order to disconnect the pipe base 21 and the step guide pipe 29 in this state, the projection 27a is pressed into the step guide pipe 29 manually or by other means. In this case, since the outer rim of the hole 22 is tapered, the projection 27a can be manually pressed with ease. Then, the leading end of the support end 27B of the lock spring 27 is turned on the curve point 27C into contact with the inner surface of the step guide pipe 29, and the pivot end 27A is bent, thereby disengaging the projection 27a from the hole 22.

When the step guide pipe 29 is drawn frontward from the pipe base 21 in this state, it is separated therefrom, as shown in Fig. 4(B). In this case, the pivot end 27A of the lock spring 27 is returned to its initial position by elasticity, and the projection 27a is engaged with the hole 29a of the step guide pipe 29. Thereby, the support leg 20 is detached from the base body 1, as shown by two-dot chain lines in Fig. 2.

In order to attach the support leg 20 to the base body 1, the upper end of the step guide pipe 29 is inserted into the front end of the pipe base 21 and is pushed until the projection 27a of the lock spring 27 abuts the open end face of the pipe base 21. Subsequently, the step guide pipe 29 is further pushed into the pipe base 21 while pressing the projection 27a protruding from the hole 29a of the step guide pipe 29. Then, the pivot end 27A of the lock spring 27 is bent, and the projection 27a is pressed against the inner surface of the pipe base 21. When the step guide pipe 29 is further pushed, the projection 27a and the hole 22 are aligned and engaged. Thereby, the pipe base 21 and the step guide pipe 29 are connected, and the support leg 20 can be attached to the base body 1.

As shown in Fig. 4(C), according to the invention, a tapered portion 25a is formed at the end (the front end of the pipe base 21) of the pipe guide 25. In this case, since the projection 27a of the lock spring 27 is pressed in contact with the inner side face of the tapered portion 25a when the step guide pipe 29 is inserted into the pipe base 21, it need not be pressed manually or by other means.

Next, the adjustment of the height of the support leg 20 will be described.

The height of the support leg 20 is adjusted by the foot-locking mechanism 50 as follows.

In a locked state shown in Fig. 5(A), while the positioning hole 45a of the pipe holder 45 and a certain positioning hole (any of the positioning holes 47-1 to 47-5) of the adjusting pipe 47 are aligned, the lock pin 55 of the foot-locking mechanism 50 is engaged with the positioning holes. In this case, the lock pin 55 is pressed toward the pipe holder 45 (leftward in Fig. 5) together with the foot-locking lever 53 by the urging force of the spring 57, and the front end 55a of the lock pin 55 protrudes outside through the pipe holder 45 (and the adjusting pipe 47) in the radial direction. Therefore, the inner adjusting pipe 47 is fixed to the outer pipe holder 45 by the lock pin 55.

In order to release the locked state shown in Fig. 5(A), the foot-locking lever 53 is slid rightward (to the side opposite from the adjusting pipe 47) while pinching the lugs 51b and 53b of the foot-locking base 51 and the foot-locking lever 53. Then, the lock pin 55 integrally fixed to the foot-locking lever 53 is simultaneously slid rightward, is disengaged from the positioning holes of the pipe holder 45 and the adjusting pipe 47, and is brought into a state shown in Fig. 5(B). In this state, by sliding the adjusting pipe 47 along the pipe holder 45 while pinching the lugs 51b and 53b, any of the positioning holes 47-1 to 47-5 is selected corresponding to a desired height.

By releasing the lugs 51b and 53b when the selected positioning hole of the adjusting pipe 47 and the positioning hole 45a of the pipe holder 45 are aligned, the foot-locking lever 53 and the lock pin 55 are pressed leftward (toward the adjusting pipe 47) by the urging force of the spring 57, and are passed through the positioning holes. The lock state shown in Fig. 5(A) is thereby brought about, and the adjusting pipe 47 is positioned.

If the positioning holes of the adjusting pipe 47 and the pipe holder 45 are not aligned, the lock pin 55 cannot be passed therethrough, and the adjusting pipe 47 cannot be positioned. In order to visually check whether the lock pin 55 can be passed, a marking for clearly showing the position of the foot-locking lever 53 may be made on the surface of the foot pipe 41.

Next, the adjustment of the height of the step 31 of the support leg 20 will be described.

The height of the step 31 is adjusted by the step-locking mechanism 30 as follows.

As shown in Fig. 6(A), the pin 35 of the step-locking mechanism 30 is engaged with any of the positioning holes 29-1 to 29-3 of the step guide pipe 29, and the step 31 is positioned on the step guide pipe 29. In this case, the joint 37, and the button 33 and the pin 55 connected thereto are pressed outward (rightward in Fig. 6) by the urging force of the spring 39. In this case, the front end 35a of the pin 35 passes through the support sleeve 32 and enters the step guide pipe 29, and the head portion 33a of the button 33 protrudes outward from the side face of the step 31.

In order to release the lock state shown in Fig. 6(A), the head portions 33a of the right and left buttons 33 of the step 31 are pressed inward (leftward in Fig. 6). Then, the pin 35 connected to the shaft portion 33b of each button 33 via the joint 37 simultaneously slides inward. The pin 35 is thereby disengaged from the positioning hole of the step guide pipe 29, thereby bringing about a state shown in Fig. 6(B). By holding the step 31 from both right and left sides and sliding the step 31 along the step guide pipes 29 in this state while pressing the head portions 33a of the right and left buttons 33, any of the positioning holes 29-1 to 29-3 is selected corresponding to a desired height.

By releasing the buttons 33 when the selection of the positioning hole of each step guide pipe 29 is completed, the joints 37 are pressed outward by the urging force of the springs 39, the pins 35 and the buttons 33 slide outward, and the pins 35 are passed through the positioning holes of the step guide pipes 29. A lock state shown in Fig. 6(A) is thereby brought about, and the step 31 is positioned.

In this way, the child seat base of the present invention allows the support leg 20 to be attached to and detached from the base body 1 with a single motion. When the child seat base is stored, and is carried into and out of the vehicle, since the size and weight can be prevented from increasing by detaching the support leg 20 from the base body 1, handling efficiency is increased, and carrying operation is facilitated. Furthermore, the foot-locking mechanism 50 allows the height of the support leg 20 to be adjusted and determined for a short period with a single motion according to the heights of the floors of various types of vehicles. Alternatively, the step-locking mechanism 30 allows the height of the step to be adjusted and determined for a short period with a single motion in accordance with the physique of a person sitting in the child seat.

### [Advantages]

As is evident from the above description, the present invention provides the advantages of, for example, easy storage and carriage or easy height adjustment.

## Claims

1. A child seat base for fixing a child seat on a seat of a vehicle, said child seat base comprising:
a base body (1) to be placed and fixed on the seat, said base body (1) having a pipe frame (10), whereby a pipe base (21) is fixed to said pipe frame (10); and
a support leg (20) to be mounted on the front side of said base body (1) so as to support a front portion of said base body (1) on a floor of the vehicle,
whereby a connecting portion is provided for detachably attaching said support leg (20) to said base body (1),
**characterized in that**
said connecting portion comprises a leaf spring (27) placed inside an end portion of a pipe (29) of said support leg (20), whereby said leaf spring (27) comprises a projection (27a) on its outer surface, said projection (27a) being retained in a hole (29a) of said pipe (29) so as to protrude from an outer surface of said pipe (29),
whereby said pipe (29) of said support leg (20) is attachable to said pipe base (21) by inserting said pipe (29) into a front end of said pipe base (21) until said projection (27a) is aligned and engaged with a hole (22) of said pipe base (21),
whereby said pipe (29) is detachable from said pipe base (21) by pressing said projection (27a) into said pipe (29) and pulling said pipe (29) from said pipe base (21), and
whereby a tapered portion (25a) is formed at the front end of said pipe base (21) such that said tapered portion (25a) projects from the front end of said pipe base (21) so that said projection (27a) of said leaf spring (27) is pressed in contact with an inner side face of said tapered portion (25a) when inserting said pipe (29) into the front end of said pipe base (21).

2. A child seat base according to claim 1, wherein said leaf spring (27) is formed as an elbowed leaf spring including a pivot end (27A) having said projection (27a) on a part of its outer surface, a support end (27B) formed on a side opposite from said pivot end (27A), and a curve point (27C) disposed therebetween.

3. The child seat base according to claim 1 or claim 2, wherein an outer rim of said hole (22) of said pipe base (21) is chamfered.

4. A child seat comprising the child seat base according to any one of the preceding claims.

## Patentansprüche

1. Basis eines Kindersitzes, um einen Kindersitz auf einem Sitz eines Fahrzeugs zu befestigen, wobei die Basis des Kindersitzes umfasst:
einen Basiskörper (1), um auf dem Sitz angeordnet und befestigt zu werden, wobei der Basiskörper einen rohrförmigen Rahmen (10) aufweist, wobei eine rohrförmige Basis (21) an dem rohrförmigen Rahmen (10) befestigt ist; und
ein Trägerbein (20), um auf der Vorderseite des Basiskörpers (1) angebracht zu werden, um so einen vorderen Abschnitt des Basiskörpers (1) auf einem Boden des Fahrzeugs abzustützen,
wobei ein Verbindungsabschnitt vorhanden ist, um das Trägerbein (20) lösbar an dem Basiskörper (1) anzubringen,
**dadurch gekennzeichnet,**
**dass** der Verbindungsabschnitt eine Blattfeder (27) umfasst, welche innerhalb eines Endabschnitts eines Rohres (29) des Trägerbeins (20) angeordnet ist, wobei die Blattfeder (27) einen Vorsprung (27a) auf ihrer äußeren Oberfläche umfasst,
wobei der Vorsprung (27a) in einem Loch (29a) des Rohrs (29) gehalten wird, um so von einer äußeren Oberfläche des Rohrs (29) hervorzuragen,
wobei das Rohr (29) des Trägerbeins (20) an der rohrförmigen Basis (21) anbringbar ist, indem das Rohr (29) in ein vorderes Ende der rohrförmigen Basis (21) eingeführt wird, bis der Vorsprung (21a) mit einem Loch (22) der rohrförmigen Basis (21) ausgerichtet und mit diesem in Eingriff kommt,
wobei das Rohr (29) von der rohrförmigen Basis (21) lösbar ist, indem der Vorsprung (27a) in das Rohr (29) gedrückt wird und das Rohr (29) von der rohrförmigen Basis (21) abgezogen wird, und
wobei ein sich verjüngender Abschnitt (25a) an dem vorderen Ende der rohrförmigen Basis (21) ausgebildet ist, so dass der sich verjüngende Abschnitt (25a) von dem vorderen Ende der rohrförmigen Basis (21) hervorragt, so dass der Vorsprung (27a) der Blattfeder (27) in einen Kontakt mit einer inneren Seitenfläche des sich verjüngender Abschnitts (25a) gedrückt wird, wenn das Rohr (29) in das vordere Ende der rohrförmigen Basis (21) eingeführt wird.

2. Basis eines Kindersitzes nach Anspruch 1, **dadurch gekennzeichnet, dass** die Blattfeder (27) als eine ellbogenförmige Blattfeder ausgebildet ist, welche ein stiftförmiges Ende (27A), welches den Vorsprung (27a) auf einem Teil seiner äußeren Oberfläche aufweist, ein stützendes Ende (27B), welches auf einer dem stiftförmigen Ende (27A) gegenüberliegenden Seite ausgebildet ist, und ein gekrümmtes Verbindungsstück (27C), welches dazwischen angeordnet ist, umfasst.

3. Basis eines Kindersitzes nach Anspruch 1 oder Anspruch 2, **dadurch gekennzeichnet, dass** ein äußerer Rand des Loches (22) der rohrförmigen Basis (21) abgefast ist.

4. Kindersitz, welcher die Basis des Kindersitzes nach einem der vorhergehenden Ansprüche umfasst.

## Revendications

1. Socle d'un siège d'enfant pour fixer un siège d'enfant sur un siège de véhicule, ledit socle de siège d'enfant comprenant :
un corps de socle (1) destiné à être placé sur le siège et fixé à celui-ci, ledit corps de socle (1) présentant un cadre sous forme de tuyau (10), dans lequel un socle sous forme de tuyau (21) est fixé au dit cadre sous forme de tuyau (10) ; et
un pied support (20) destiné à être monté sur le côté avant dudit corps de socle (1) afin de supporter une partie avant dudit corps de socle (1) sur un plancher du véhicule,
dans lequel une partie de liaison est prévue pour fixer de façon amovible ledit pied support (20) audit corps de socle (1),
**caractérisé en ce que**
ladite partie de liaison comprend un ressort à lame (27) placé à l'intérieur d'une partie d'extrémité d'un tuyau (29) dudit pied support (20), dans lequel ledit ressort à lame (27) comprend une saillie (27a) sur sa surface externe, ladite saillie (27a) étant retenue à l'intérieur d'un orifice (29a) dudit tuyau (29) de façon à faire saillie à partir d'une surface externe dudit tuyau (29),
dans lequel ledit tuyau (29) dudit pied support (20) est susceptible d'être fixé audit socle sous forme de tuyau (21) par insertion dudit tuyau (29) dans une extrémité avant dudit socle sous forme de tuyau (21) jusqu'au moment où ladite saillie (27a) s'aligne et vient en prise avec un orifice (22) dudit socle sous forme de tuyau (21),
dans lequel ledit tuyau (29) est susceptible d'être séparé dudit socle sous forme de tuyau (21) en enfonçant ladite saillie (27a) à l'intérieur dudit tuyau (29) et en tirant sur ledit tuyau (29) pour le séparer dudit socle sous forme de tuyau (21), et
dans lequel une partie effilée (25a) est formée au niveau de l'extrémité avant dudit socle sous forme de tuyau (21) de sorte que ladite partie effilée (25a) fasse saillie à partir de l'extrémité avant dudit socle sous forme de tuyau (21) de sorte que ladite saillie (27a) dudit ressort à lame (27) soit sollicitée pour venir en contact avec une face latérale interne de ladite partie effilée (25a) lors de l'insertion dudit tuyau (29) dans l'extrémité avant dudit socle sous forme de tuyau (21).

2. Socle de siège pour enfant selon la revendication 1, dans lequel ledit ressort à lame (27) est formé sous forme d'un ressort à lame coudé présentant une extrémité de pivotement (27A) présentant ladite saillie (27a) sur une partie de sa surface externe, une extrémité de support (27B) formée sur un côté à l'opposé de ladite extrémité de pivotement (27A), et une partie incurvée (27C) disposée entre les deux.

3. Socle de siège d'enfant selon la revendication 1 ou la revendication 2,
dans lequel un rebord externe dudit orifice (22) dudit socle sous forme de tuyau (21) est chanfreiné.

4. Siège d'enfant comprenant le socle de siège d'enfant selon l'une quelconque des revendications précédentes.
